# EUROPÄISCHE PATENTSCHRIFT

(11) **EP 2 745 376 B1**
(45) Veröffentlichungstag und Bekanntmachung des Hinweises auf die Patenterteilung: **28.10.2015**
(21) Anmeldenummer: 12755981.3
(22) Anmeldetag: 29.08.2012
(51) Int. Cl.: H02J 7/35, H02J 3/38, H02J 3/32

(54) **SCHALTUNGSANORDNUNG**
CIRCUIT ARRANGEMENT
SYSTÈME DE COUPLAGE

(30) Priorität: 29.09.2011 DE 102011083741
(43) Veröffentlichungstag der Anmeldung: 25.06.2014
(73) Patentinhaber: Siemens Aktiengesellschaft, 80333 München (DE)
(72) Erfinder: BUCHSTALLER, Dominic, 91056 Dechsendorf (DE); REINSCHKE, Johannes, 90425 Nürnberg (DE)
(86) Internationale Anmeldenummer: PCT/EP2012/066788
(87) Internationale Veröffentlichungsnummer: WO 2013/045194

(56) Entgegenhaltungen:
- EP-A1- 2 330 712
- JP-A- 6 178 461
- US-A1- 2011 148 205

## Beschreibung

Die Erfindung betrifft eine Schaltungsanordnung zur variablen Verschaltung von Energiequellen und Energieverbrauchern.

Zurzeit verbreiten sich dezentrale Energieerzeuger, beispielsweise Photovoltaik-Anlagen, in kommerziellen wie privaten Gebäuden. Zusätzlich ist davon auszugehen, dass in der Zukunft Akkumulatoren von elektrisch betriebenen Fahrzeugen in größeren Mengen in denselben Gebäuden am Netz angeschlossen sein werden. Diese sind sowohl Energiesenke als auch Energiequelle. Weitere Geräte, deren Verbreitung möglich ist, sind beispielsweise Windgeneratoren und wasserbasierte Generatoren.

Typischerweise werden alle solche Geräte heute mit einem jeweiligen eigenen AC/DC-Anschluss aufgebaut. Nachteilig daran ist zum Einen, dass eine gewisse Redundanz der leistungselektronischen Bauelemente entsteht, was sich negativ auf Kosten und Bauraum auswirkt. Zum Anderen ist die Kontrolle des Energieflusses zwischen dem Versorgungsnetz und den einzelnen vorhandenen Geräten schwierig.

Aus der EP 2317623 A1 ist ein sog. "demand-response" Aufbau bekannt, bei dem eine Windenergiequelle und eine PV-Anlage über einen gemeinsamen AC/DC-Wandler mit dem Versorgungsnetzwerk verbunden sind. Der AC/DC-Wandler wird dabei durch ein Signal aus dem Versorgungsnetz gesteuert.

Aus der US 2010/0198421 A1 ist ein Anschlussystem bekannt, bei dem ein sog. "Intelligentes Energiemanagement-System" den Energiefluss basierend u.a. auf Energiepreisen steuert. Das System weist einen gemeinsamen AC/DC-Wandler in Kombination mit einem Multiport-DC/DC-Wandler auf. Sämtliche DC-Geräte sind über pulsweitenmodulierte Halbleiterschalter mit einem gemeinsamen DC-Bus verbunden. Nachteilig an dem beschriebenen Aufbau ist, dass der Multiport-DC/DC-Wandler ein komplexes Gerät ist und die DC-Geräte aufwendig angesteuert werden müssen, um den Anschluss an den gemeinsamen DC-Bus zu ermöglichen.

Weitere Anschlusssysteme sind aus JP 6 178 461 A, US 2011/148205 A1 und EP 2 330 712 A1 bekannt.

Es ist Aufgabe der vorliegenden Erfindung, eine verbesserte Schaltungsanordnung anzugeben, mit der insbesondere redundante leistungselektronische Aufbauten vermindert werden. Diese Aufgabe wird durch eine Schaltungsanordnung mit den Merkmalen von Anspruch 1 gelöst.

Die erfindungsgemäße Schaltungsanordnung zur variablen Verschaltung von Energiequellen und Energieverbrauchern weist die folgenden Elemente auf: Einen bidirektionalen AC/DC-Wandler zur Wandlung einer Gleichspannung in Gleichstrom und umgekehrt. Weiterhin weist die Schaltungsanordnung einen DC/DC-Wandler und wenigstens vier elektrische Schalter, insbesondere leistungselektronische Halbleiterschalter, auf. Schließlich umfasst die Schaltungsanordnung eine Steuerungseinrichtung zur Ansteuerung der Schalter und der Wandler.

Die Elemente sind dabei in der folgenden Weise untereinander verbunden: Der AC/DC-Wandler ist auf seiner DC-Seite mit einer ersten Seite des DC/DC-Wandlers verbunden. Die Verbindung ist dabei unterbrechbar durch einen ersten der elektrischen Schalter. Weiterhin ist der AC/DC-Wandler auf seiner DC-Seite mit einer zweiten Seite des DC/DC-Wandlers verbunden. Diese Verbindung ist über einen zweiten der elektrischen Schalter unterbrechbar.

Die erste Seite des DC/DC-Wandlers ist ferner mit einem dritten der elektrischen Schalter verbunden und über diesen mit einer Energiespeichereinrichtung verbindbar, während die zweite Seite des DC/DC-Wandlers mit einem vierten der elektrischen Schalter verbunden ist und über diesen mit einer Energieerzeugereinrichtung verbindbar ist. Der AC/DC-Wandler schließlich ist auf seiner AC-Seite mit dem elektrischen Versorgungsnetz verbindbar.

Der AC/DC-Wandler ist bidirektional, kann also beide Leistungsflussrichtungen bedienen. Er kann also sowohl Leistung vom Versorgungsnetzwerk zu den DC-Senken leiten als auch Leistung, die von Geräten auf der DC-Seite erzeugt wird, zum Versorgungsnetzwerk leiten. Der AC/DC-Wandler wird von den DC-Komponenten gemeinsam benutzt, ebenso wie der DC/DC-Wandler.

Der DC/DC-Wandler erlaubt den Energietransfer von und zu der verschiedenen DC-Geräten wie dem oder den Energieerzeugereinrichtungen oder der oder den Energiespeichereinrichtungen. Dabei sorgt der DC/DC-Wandler für ein Hoch- oder Heruntersetzen der jeweiligen Spannungen Dadurch werden sie beispielsweise für die DC-Seite des AC/DC-Wandlers zur Netzeinspeisung brauchbar gemacht oder aber zur Ladung eines elektrischen Akkumulators. Der DC/DC-Wandler kann sowohl uni- als auch bidirektional ausgestaltet sein.

Die elektrischen Schalter erlauben das selektive Verbinden der verschiedenen Elemente der Schaltungsanordnung miteinander. Dabei ist es für die elektrischen Schalter nicht notwendig, eine pulsweitenmodulierte Ansteuerung zu erlauben, es reicht eine Ein/Ausschaltmöglichkeit.

Die Steuerungseinrichtung übernimmt die Ansteuerung der einzelnen Komponenten der Schaltungsanordnung wie der elektrischen Schalter und der Wandler. Die Schaltungsanordnung erlaubt es vorteilhaft bei besonders einfachem Aufbau, Energieerzeuger und Speichereinrichtungen auf DC-Seite flexibel miteinander und mit dem Versorgungsnetzwerk zu verbinden. Es wird dafür eine minimale Anzahl an leistungselektronischen Komponenten und Schaltern benötigt.

Bevorzugt umfasst die Schaltungsanordnung eine Kommunikationseinrichtung. Diese kann einzeln oder in Kombination mehrere Funktionen umfassen. So kann die Kommunikationseinrichtung ausgestaltet sein, Preisinformationen des Elektrizitätsversorgers zu empfangen. Eine weitere Funktion ist die Kommunikation mit anderen Geräten, beispielsweise zur Fernsteuerung und Eingabe durch den Benutzer. Die Kommunikationseinrichtung kann beispielsweise eine Netzwerkverbindung oder eine Internetverbindung umfassen. Die Kommunikationseinrichtung kann weiterhin eine PLC-Verbindung (power-line communications) umfassen. Auch andere Verbindungsformen können eingebaut sein.

Die Steuerungseinrichtung umfasst in einer vorteilhaften Ausgestaltung Mittel, eine Optimierung des Energieflusses zu ermitteln. Hierzu werden einzeln oder in Kombination folgende Parameter berücksichtigt: Strompreisinformationen sowohl für das Entnehmen als auch das Einspeisen von elektrischer Energie in das Versorgungsnetzwerk, Ladestandsinformationen zu angeschlossenen Energiespeichereinrichtungen und von Seiten des Benutzers vorgegebene Optimierungsziele. Die Optimierung basiert dabei zweckmäßig auf mathematischen Optimierungsprinzipien, beispielsweise dynamische Programmierung oder lineare Optimierung. Bevorzugt benötigt die Steuerungseinrichtung zur Optimierung keine Benutzereingaben außer dem Optimierungsziel und eventueller Randbedingungen.

Die Optimierung wird bevorzugt mit einer festlegbaren zeitlichen Häufigkeit wiederholt, um auf Ereignisse zu reagieren wie beispielsweise eine nicht angekündigte Änderung bei den Strompreisen. Basierend auf dem Ergebnis der aktuellsten Optimierung steuert die Steuereinrichtung die Komponenten der Schaltungsanordnung, um das Optimierungsziel zu erreichen.

Besonders vorteilhaft löst die beschriebene Schaltungsanordnung das Problem der Verschaltung von mehreren Endgeräten mit dem Versorgungsnetz mit einer minimalen Zahl von Schaltern und einem hocheffizienten DC/DC-Wandler. Dabei ist es möglich, sowohl beim DC/DC-Wandler als auch beim AC/DC-Wandler auf Standardkomponenten zurückzugreifen. Im Gegensatz zu bekannten Lösungen ist es nicht notwendig, beispielsweise schnell schaltende Halbleiterschalter in Pulsweitenmodulation zusammen mit einem Multiport-DC/DC-Wandler einzusetzen wie beispielsweise in der US 2010/0198421 A1.

Bevorzugte, jedoch keinesfalls einschränkende Ausführungsbeispiele für die Erfindung werden nunmehr anhand der Figuren der Zeichnung näher erläutert. Dabei sind die Merkmale schematisiert dargestellt und analoge Elemente sind mit den gleichen Bezugszeichen gekennzeichnet. Es zeigen
Figur 1 ein Diagramm für eine Schaltungsanordnung mit einem unidirektionalen DC/DC-Wandler und mehreren DC-Geräten,
Figur 2 ein Leistungsflussdiagramm für die Schaltungsanordnung mit unidirektionalem DC/DC-Wandler bei Rückspeisung von Energie aus einer Batterie in das Versorgungsnetz,
Figur 3 ein Leistungsflussdiagramm für die Schaltungsanordnung mit unidirektionalem DC/DC-Wandler bei Aufladung der Batterie durch Energie einer Photovoltaik-Anlage,
Figur 4 ein Leistungsflussdiagramm für die Schaltungsanordnung mit unidirektionalem DC/DC-Wandler bei Rückspeisung von Energie der Photovoltaik-Anlage in das Versorgungsnetz,
Figur 5 ein Leistungsflussdiagramm für die Schaltungsanordnung mit unidirektionalem DC/DC-Wandler bei Aufladung der Batterie aus dem Versorgungsnetz.
Figur 6 ein Leistungsflussdiagramm für eine Schaltungsanordnung mit einem bidirektionalen DC/DC-Wandler und mehreren DC-Geräten,

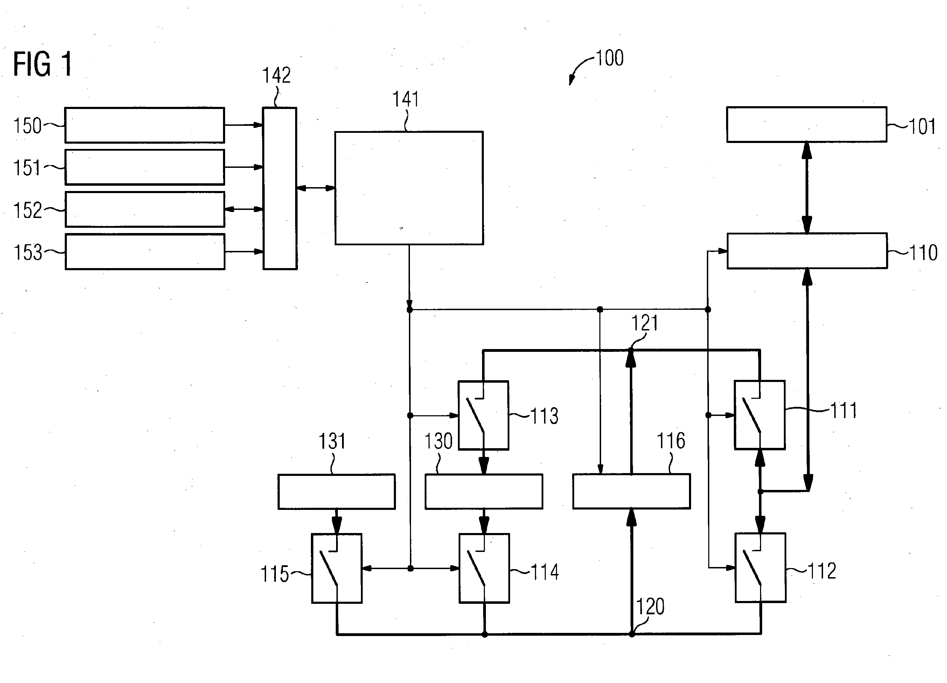

Figur 1 zeigt ein beispielhaftes, in einem kommerziellen Gebäude angeordnetes Energieversorgungs-System 100 mit einem Anschluss an das externe elektrische Versorgungsnetz 101. Das Versorgungsnetz 101 dient in üblicher Weise der elektrischen Versorgung im Gebäude. Das Gebäude ist mit einer Photovoltaik-Anlage 131 ausgestattet. Weiterhin umfasst das Gebäude Anschlussmöglichkeiten zur Aufladung von elektrisch betriebenen Fahrzeugen. Die Akkumulatoren eventuell angeschlossener Autos sind in Figur 1 symbolisch als Akku 130 dargestellt. Die Speichermöglichkeit des Akkus 130 variiert dabei mit der Anzahl angeschlossener Fahrzeuge und kann auch zweitweise vollständig entfallen. Auch der Ladestand des Akkus 130 und somit die Möglichkeiten zur Abgabe und Aufnahme von Leistung können variieren.

Die vorhandenen elektrischen Systeme Versorgungsnetz 101, Akku 130, Photovoltaik-Anlage 131 sind im Energieversorgungs-System 100 auf besondere Art und Weise verschaltet, um eine flexible Verbindung der Elemente bei möglichst geringem Aufwand zu erreichen. Dazu umfasst das Energieversorgungs-System 100 einen unidirektionalen DC/DC-Wandler 116 und einen bidirektionalen AC/DC-Wandler 110. Der AC/DC-Wandler 110 ist dabei AC-seitig an das Versorgungsnetz 101 angeschlossen. DC-seitig ist der AC/DC-Wandler 110 über einen ersten Schalter 111 mit der Ausgangsseite des unidirektionalen DC/DC-Wandlers 116 verbunden. DC-seitig ist der AC/DC-Wandler 110 über einen zweiten Schalter 112 auch mit der Eingangsseite des DC/DC-Wandlers 116 verbunden.

Der Akku 130 kann sowohl als Leistungslieferant verwendet werden als auch als Verbraucher. Der Akku 130 ist daher mit beiden Seiten des DC/DC-Wandlers 116 verbunden, mit der Ausgangsseite über einen dritten Schalter 113 und mit der Eingangsseite über einen vierten Schalter 114. Dabei ist es zweckmäßig, wenn einzelne Akkumulatoren einzelner Fahrzeuge jeweils über eigene Schalter getrennt angeschlossen sind, da sich der Ladezustand der Akkumulatoren deutlich unterscheiden kann.

Da es sich bei der Photovoltaik-Anlage 131 um einen puren Energieerzeuger handelt, ist dieser über einen fünften Schalter 115 lediglich mit der Eingangsseite des DC/DC-Wandlers 116 verbunden.

Das Energieversorgungs-System 100 umfasst weiterhin eine Steuereinrichtung 141. Die Steuereinrichtung 141 weist Verbindungen zu den zu steuernden Elementen des Energieversorgungs-Systems 100 auf, nämlich den Schaltern 111...115 und den Wandlern 110, 116. Es ist möglich, eine Steuerung der Photovoltaik-Anlage 131 ebenfalls in die Steuereinrichtung 141 zu integrieren. Vorteilhaft ist es aber, wenn die Steuereinrichtung unabhängig von der Auslegung der konkreten Photovoltaik-Anlage 131 arbeitet und somit diese nicht mitsteuert.

Die Steuereinrichtung 141 umfasst weiterhin eine Kommunikationseinrichtung 142, die der Aufnahme von externen Daten und Ausgabe von Informationen dient. So nimmt die Kommunikationseinrichtung 142 Daten vom Energieversorger zu Strompreisen 150 auf. Weiterhin nimmt die Kommunikationseinrichtung 142 Wettervorhersagedaten 151 auf. Auch Nutzereingaben 152 sind über die Kommunikationseinrichtung 142 einzugeben. Schließlich nimmt die Kommunikationseinrichtung 142 Ladestands-Daten 153 zu einem angeschlossenen Akku 130 auf. Auch ist die Kommunikationseinrichtung 142 ausgestaltet, Informationen über den Status der Steuereinrichtung und der angeschlossenen elektrischen Geräte auszugeben, beispielsweise auf einem angeschlossenen Bildschirm (nicht gezeigt).

Schließlich umfasst die Steuereinrichtung 141 eine mikroprozessorbasierte Optimierungseinheit. Die Optimierungseinheit nimmt die vorhandenen Daten wie beispielsweise Ladestands-Daten 153 und Strompreise 150 und errechnet beispielsweise mittels linearer Optimierung eine Ansteuerung der elektrischen Komponenten, die ein vorgegebenes Optimierungsziel mit den vorgegebenen Möglichkeiten am besten erfüllt.

Die elektrischen Leitungen im Energieversorgungs-System 100 sind mit Pfeilen versehen, die die möglichen Leistungsflussrichtungen darstellen. Verschiedene Szenarien der tatsächlichen Beschaltung werden im Folgenden in den weiteren Figuren zusammen mit einem Ablaufbeispiel für einen Tagesablauf angegeben.

Für das folgende Beispiel wird davon ausgegangen, dass die Kommunikationseinrichtung 142 Zugriff auf die folgenden Informationen hat:
- den aktuellen Strompreis, der vom Energieversorger zur Verfügung gestellt wird;
- eine Wettervorhersage, die eine Aussage erlaubt, wie viel Leistung durch die Photovoltaik-Anlage 131 erzeugt werden kann;
- den aktuellen Ladestand des angeschlossenen Akkus 130 eines elektrischen Fahrzeugs;
- Eine Strompreisstatistik, die eine Vorhersage zum Strompreis über den Tag hinweg erlaubt.

Der Strompreis soll dabei für das vorliegende Beispiel einem Verlauf folgen, der zwei Maximalwerte zwischen 6 und 8 Uhr vormittags und 6 und 8 Uhr nachmittags aufweist, wo viel Leistung aus dem Versorgungsnetz entnommen wird. Zusätzlich steigt der Strompreis typischerweise etwas, wenn das Wetter keine gute Versorgung aus Solaranlagen erlaubt.

Für den im Folgenden verwendeten beispielhaften Tag ist sonniges Wetter bis 4 Uhr nachmittags vorhergesagt und nachfolgend Regen. Der Nutzer des Systems möchte das Elektroauto um 10 Uhr abends für zwei Stunden verwenden und braucht eine wenigstens 50%-ige Aufladung der Autobatterie dafür. Weiterhin ist eine Voreinstellung des Nutzers oder Administrators des Energieversorgungs-Systems 100, dass die Energiekosten als Optimierungsziel minimalisiert und die durch Rückspeisung ins Versorgungsnetz 101 gemachten Gewinne maximiert werden sollen. Das vorliegende Beispiel beginnt um 6 Uhr morgens und der Ladezustand des Akkus 130 wird als voll angenommen. Die Optimierungseinheit errechnet in diesem Beispiel stündlich einen optimalen Energiefluss, der angepasst ist an die derzeitigen und zukünftigen, angenommenen, Bedingungen und Ereignisse. Der Berechnungszeitraum ist nur beispielhaft und kann auch anders gewählt werden; beispielsweise kann auch alle 5 Minuten eine neue Berechnung angestellt werden.

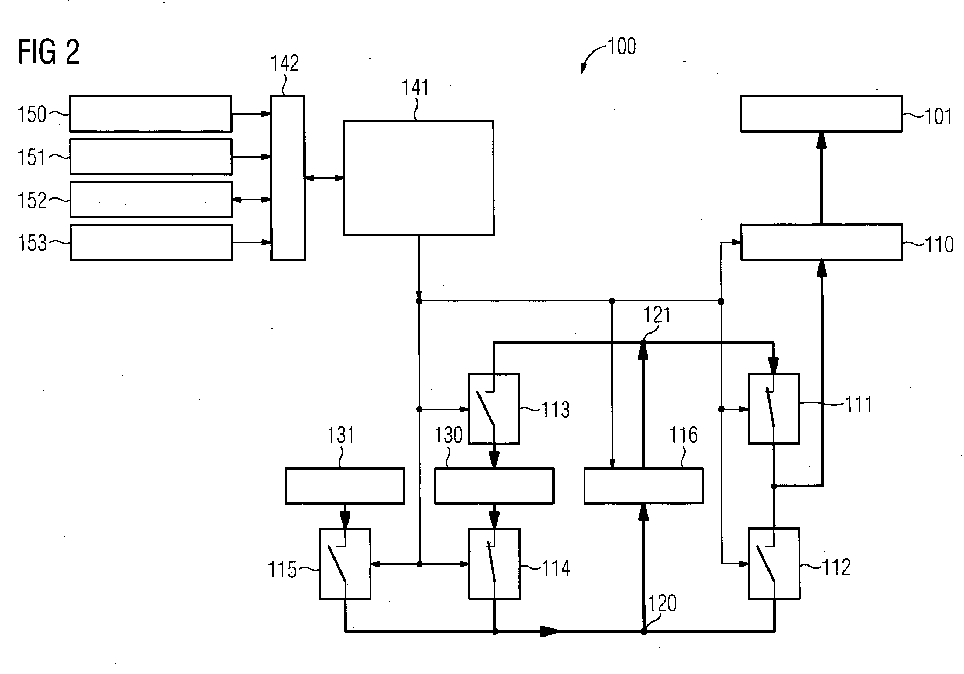

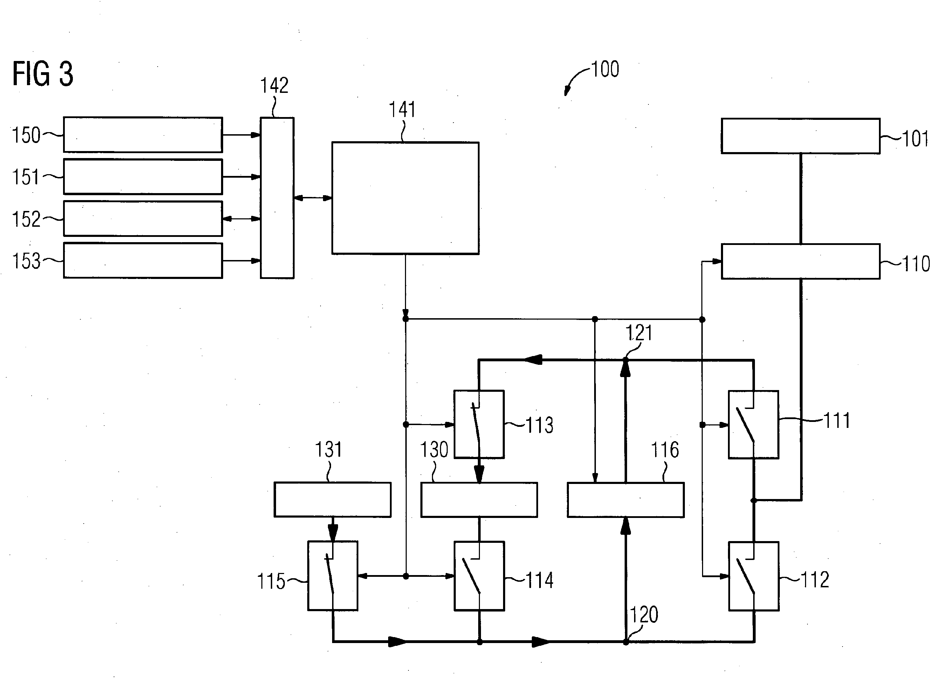

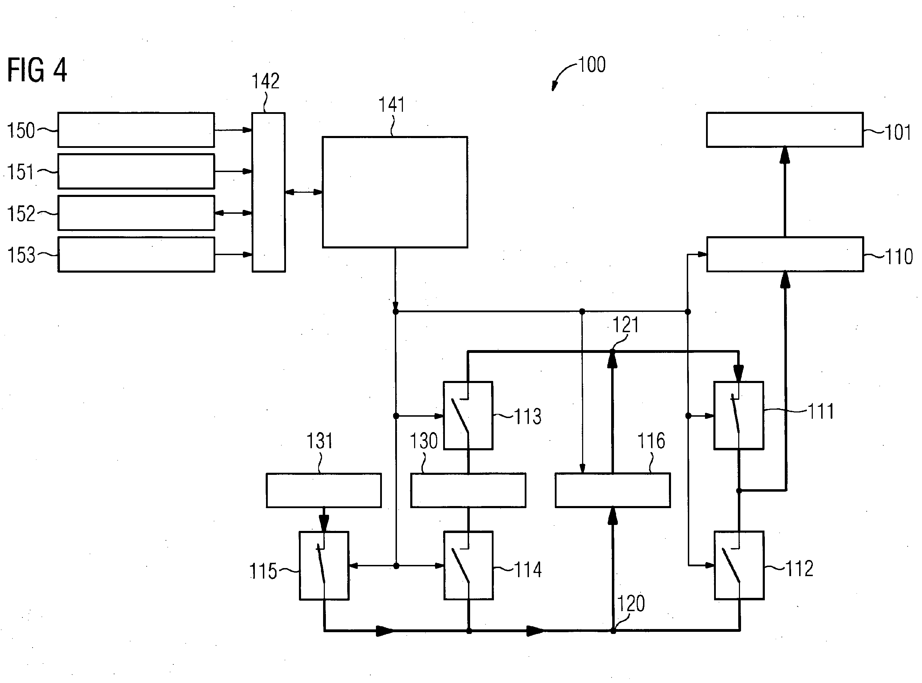

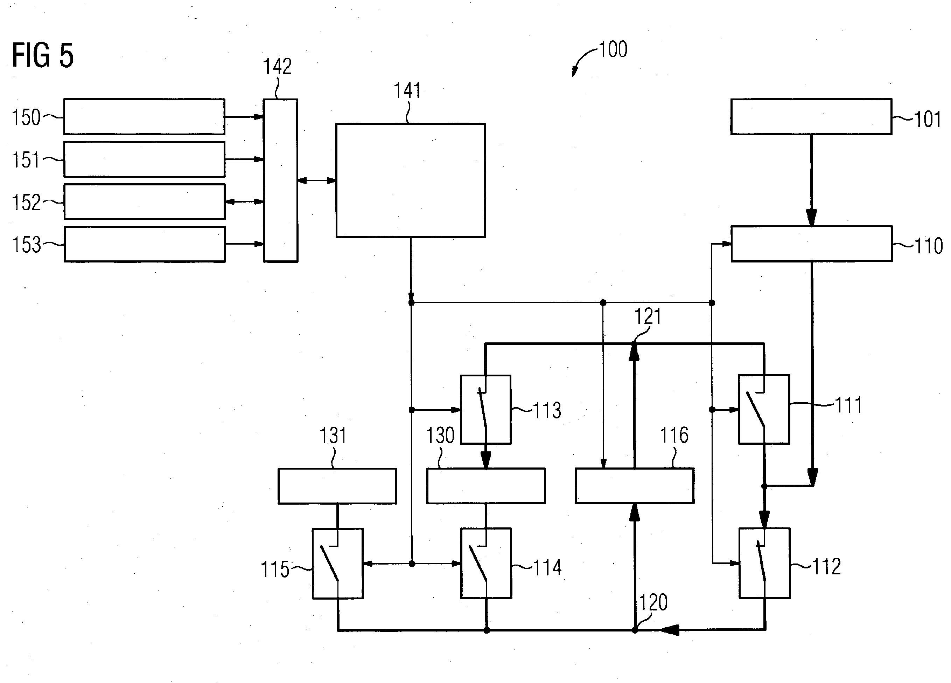

Der optimierte Energiefluss sieht im Beispiel folgendermaßen aus:
6-8 Uhr vormittags: Der generell hohe Verbrauch in dieser Zeit bewirkt einen erhöhten Strompreis. Da das Auto noch für einige Zeit nicht gebraucht wird, wird die im Akku 130 gespeicherte Energie voll ins Versorgungsnetz 101 zurückgespeist. Die entsprechende Ansteuerung der elektrischen Komponenten ist in Figur 2 gezeigt. So werden hierfür der erste Schalter 111 und der vierte Schalter 114 geschlossen, während die restlichen Schalter 112, 113, 115 offen bleiben. Hierdurch ist der Akku 130 mit der Eingangsseite des DC/DC-Wandlers 116 verbunden, der die Spannung des Akkus 130 auf ein für den AC/DC-Wandler geeignetes Niveau bringt. Der DC/DC-Wandler 116 ist ausgangsseitig mit dem AC/DC-Wandler 110 verbunden. Somit ist ein direkter Strompfad geschaffen für die Rückspeisung der Energie aus dem Akku 130 in das Versorgungsnetz 101. Ein schnelles Schalten der Schalter 111...115 ist hierfür nicht erforderlich und auch eine Pulsweitenmodulation wird nicht durchgeführt. Vielmehr bleiben die Schalter 111...115 im entsprechenden Schaltzustand, solange sich die äußeren Bedingungen nicht ändern (beispielsweise der Akku 130 nicht mehr zur Verfügung steht) oder eine neue Berechnung der Optimierungseinheit eine Änderung verlangt.
8 Uhr vormittags bis 2 Uhr nachmittags: Die Strompreise sind moderat und die elektrische Leistung der Photovoltaik-Anlage 131 könnte ins Versorgungsnetz 101 zurückgespeist werden. Allerdings ergibt die Berechnung der Optimierungseinheit, dass es günstiger ist, die Energie der Photovoltaik-Anlage 131 in den Akku 130 zu speisen und dort zu speichern, um sie später zu einem höheren Preis verkaufen zu können. Das liegt in diesem Beispiel am zu erwartenden schlechten Wetter, das die zu erwartende Leistung der Photovoltaik-Anlage 131 in der Nachmittagszeit gering sein lässt. Die entsprechende Ansteuerung der elektrischen Komponenten ist in Figur 3 gezeigt. So werden hierfür der dritte Schalter 113 und der fünfte Schalter 115 geschlossen, während die restlichen Schalter 111, 112, 114 offen bleiben. Hierdurch ist der Akku 130 mit der Ausgangsseite des DC/DC-Wandlers 116 verbunden. Der DC/DC-Wandler 116 ist eingangsseitig mit der Photovoltaik-Anlage 131 verbunden. Somit ist ein direkter Strompfad geschaffen für die Ladung des Akkus 130 aus der Photovoltaik-Anlage 131. Dabei kann eine geeignete Transformation der Spannungsniveaus durch den DC/DC-Wandler 116 vorgenommen werden. Auch hier ist ein schnelles Schalten der Schalter 111...115 ist nicht nötig. Solange sich die äußeren Bedingungen nicht ändern (beispielsweise wenn der Akku 130 voll geladen ist) oder eine neue Berechnung der Optimierungseinheit eine Änderung verlangt, bleibt der Schaltzustand erhalten.
2-3 Uhr nachmittags: Die Ladestands-Daten 153 sagen aus, dass der Akku 130 voll geladen ist. Eine weitere Ladung ist daher nutzlos und die Optimierungseinheit bestimmt, dass ab jetzt die von der Photovoltaik-Anlage 131 generierte Leistung in das Versorgungsnetz 101 zurückgespeist wird. Die entsprechende Ansteuerung der elektrischen Komponenten ist in Figur 4 gezeigt. So werden hierfür der erste Schalter 111 und der fünfte Schalter 115 geschlossen, während die restlichen Schalter 112...114 offen bleiben. Hierdurch ist der DC/DC-Wandler 116 eingangsseitig mit der Photovoltaik-Anlage 131 verbunden. Ausgangsseitig besteht die Verbindung mit dem AC/DC-Wandler 110. Somit ist ein direkter Strompfad geschaffen für die Rückspeisung der Leistung der Photovoltaik-Anlage 131 in das Versorgungsnetz 101. Dabei kann wiederum eine geeignete Transformation der Spannungsniveaus durch den DC/DC-Wandler 116 vorgenommen werden.
3-5 Uhr nachmittags: Wie vorhergesagt, bedeckt sich der Himmel und Regen und Wolken lassen die von der Photovoltaik-Anlage 131 elektrische Energie praktisch zu Null werden. Da in diesem Beispiel davon ausgegangen wird, dass die Strompreise variabel sind und auch aktuell angepasst werden, steigt hierdurch der Strompreis. Da das Auto immer noch für einige Zeit nicht gebraucht wird, errechnet die Optimierungseinheit, dass es sinnvoll ist, die im Akku 130 gespeicherte Energie ins Versorgungsnetz 101 zurückzuspeisen. Die entsprechende Ansteuerung der elektrischen Komponenten zeigt wieder Figur 2. Es werden wieder der erste Schalter 111 und der vierte Schalter 114 geschlossen, während die restlichen Schalter 112, 113, 115 offen bleiben.
5-6 Uhr nachmittags: Das Wetter ändert sich entgegen der Vorhersage und es wird wieder sonnig. Den Rechenergebnissen der Optimierungseinheit folgend wird die wiedererstarkte Leistung der Photovoltaik-Anlage 131 nun verwendet, die Ladung des Akkus 130 soweit als möglich zu steigern für das dann folgende Strompreismaximum zwischen 6 und 8 Uhr abends. Die entsprechende Ansteuerung der elektrischen Komponenten ist wieder in Figur 3 gezeigt.
6-8 Uhr abends: Der generell hohe Verbrauch in dieser Zeit bewirkt wie erwartet einen hohen Strompreis. Da noch Zeit zur Wiederaufladung des Akkus 130 verbleibt, wird die im Akku 130 gespeicherte Energie voll ins Versorgungsnetz 101 zurückgespeist. Die entsprechende Ansteuerung der elektrischen Komponenten ist in Figur 2 gezeigt.
8-10 Uhr abends: Die Strompreise sind moderat. In dieser Zeit wird die Ladung des Akkus 130 auf die benutzerseitig geforderten 50% gebracht. Da die Photovoltaik-Anlage 131 im vorliegenden Beispiel um diese Zeit keine Energie mehr liefert, wird die nötige Energie dem Versorgungsnetz 101 entnommen. Da die Strompreise in der Nacht typischerweise am niedrigsten sind, wird erst in der Nacht eine Ladung auf über 50% vorgenommen. Die entsprechende Ansteuerung der elektrischen Komponenten ist in Figur 5 gezeigt. So werden hierfür der zweite Schalter 112 und der dritte Schalter 113 geschlossen, während die restlichen Schalter 111, 114, 115 offen bleiben. Hierdurch ist der Akku 130 mit der Ausgangsseite des DC/DC-Wandlers 116 verbunden. Der DC/DC-Wandler 116 ist eingangsseitig mit dem AC/DC-Wandler 110 verbunden. Somit ist ein direkter Strompfad geschaffen für die Ladung des Akkus 130 aus dem Versorgungsnetz 101.
10-12 Uhr nachts: Das System ist im Ruhezustand, da die Photovoltaik-Anlage 131 keinen Strom liefert und der Akku 130 nicht an das System angeschlossen ist.
12-6 Uhr nachts: Die Strompreise sind niedrig. Der Akku 130 wird aus dem Versorgungsnetz 101 voll aufgeladen, um zur Rückspeisung bei hohen Strompreisen zur Verfügung zu stehen. Die Die entsprechende Ansteuerung der elektrischen Komponenten entspricht wiederum der der Figur 5.

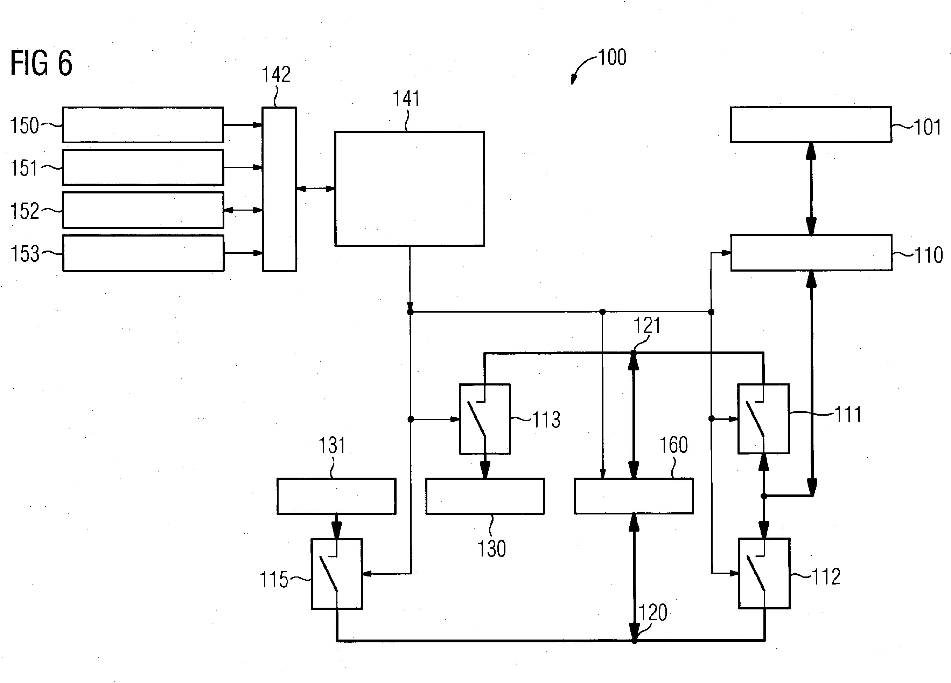

Einen alternativen Aufbau des Systems zeigt Figur 6. Die Komponenten stimmen dabei zum größeren Teil mit denen der vorherigen Figuren überein. An der Stelle des unidirektional arbeitenden DC/DC-Wandlers 116 wird hierbei jedoch ein bidirektional arbeitender DC/DC-Wandler 160 verwendet. Hierdurch wird es möglich, den vierten Schalter 114 und die Verbindung des Akkus 130 über diesen vierten Schalter 114 wegzulassen. Der Akku ist in diesem Fall nur einseitig über den dritten Schalter 113 mit dem bidirektionalen DC/DC-Wandler 160 verbunden. Die für das vorherige Beispiel gezeigten Schaltungsszenarien können mit dem bidirektionalen DC/DC-Wandler 160 ebenso realisiert werden, wobei bei Verbindung des Akkus 130 mit dem bidirektionalen DC/DC-Wandler 160 stets der dritte Schalter eingeschaltet wird. Durch die in Figur 6 gezeigte Verschaltung des bidirektionalen DC/DC-Wandlers 160 wird die volle Flexibilität mit nur 4 Schaltern 111...113, 115 erhalten.

## Patentansprüche

1. Schaltungsanordnung zur variablen Verschaltung von Energieerzeugereinrichtungen (130, 131) und Energiespeichereinrichtungen (130), aufweisend:
- einen bidirektionalen AC/DC-Wandler (110),
- einen DC/DC-Wandler (116, 160),
- wenigstens vier elektrische Schalter (111...115),
- eine Steuerungseinrichtung (141) zur Ansteuerung der Schalter (111...115) und der Wandler (110, 116, 160),
wobei
- der AC/DC-Wandler (110) auf seiner DC-Seite über einen ersten der elektrischen Schalter (111) mit einer ersten Seite des DC/DC-Wandlers (116, 160) verbunden ist,
- der AC/DC-Wandler (110) auf seiner DC-Seite über einen zweiten der elektrischen Schalter (112) mit einer zweiten Seite des DC/DC-Wandlers (116, 160) verbunden ist,
- die erste Seite des DC/DC-Wandlers (116, 160) mit einem dritten der elektrischen Schalter (113) verbunden ist und über diesen mit einer Energiespeichereinrichtung (130) verbindbar ist,
- die zweite Seite des DC/DC-Wandle (116, 160) mit einem vierten der elektrischen Schalter (115) verbunden ist und über diesen mit einer Energieerzeugereinrichtung (131) verbindbar ist,
- der AC/DC-Wandler (110) auf seiner AC-Seite mit dem elektrischen Versorgungsnetz (101) verbindbar ist.

2. Schaltungsanordnung gemäß Anspruch 1, bei der der DC/DC-Wandler (116, 160) ein bidirektionaler DC/DC-Wandler (160) ist.

3. Schaltungsanordnung gemäß Anspruch 1, bei der der DC/DC-Wandler (116, 160) unidirektional ausgestaltet ist, und die zweite Seite des DC/DC-Wandlers (116) mit einem fünften elektrischen Schalter (114) verbunden ist und über diesen mit der Energiespeichereinrichtung (130) verbindbar ist.

4. Schaltungsanordnung gemäß Anspruch 3, bei der die Steuerungseinrichtung (141) ausgestaltet ist, für eine Rückspeisung von in der Energiespeichereinrichtung (130) gespeicherter elektrischer Energie in das Versorgungsnetz (101) den fünften und ersten elektrischen Schalter (114, 111) einzuschalten und die verbleibenden Schalter (112, 113, 115) auszuschalten, wodurch ein Strompfad von der Energiespeichereinrichtung (130) über den DC/DC-Wandler (116) und den AC/DC-Wandler (110) zum elektrischen Versorgungsnetz (101) geschaltet wird.

5. Schaltungsanordnung gemäß Anspruch 3 oder 4, bei der die Steuerungseinrichtung (141) ausgestaltet ist, für eine Speisung der Energiespeichereinrichtung (130) aus der Energieerzeugereinrichtung (131) den dritten und vierten elektrischen Schalter (113, 115) einzuschalten und die verbleibenden Schalter (111, 112, 114) auszuschalten.

6. Schaltungsanordnung gemäß einem der Ansprüche 3 bis 5, bei der die Steuerungseinrichtung (141) ausgestaltet ist, für eine Rückspeisung von in der Energieerzeugereinrichtung (131) erzeugter Energie in das Versorgungsnetz (101) den vierten und den ersten elektrischen Schalter (111, 115) einzuschalten und die verbleibenden Schalter (112, 113, 114) auszuschalten.

7. Schaltungsanordnung gemäß einem der Ansprüche 3 bis 5, bei der die Steuerungseinrichtung (141) ausgestaltet ist, für eine Ladung der Energiespeichereinrichtung (130) aus dem Versorgungsnetz (101) den zweiten und den dritten elektrischen Schalter (112, 113) einzuschalten und die verbleibenden Schalter (111, 114, 115) auszuschalten.

8. Schaltungsanordnung gemäß einem der vorangehenden Ansprüche, bei der die Steuerungseinrichtung (141) eine Optimierungseinheit umfasst, ausgestaltet, unter Berücksichtigung vorgebbarer Randbedingungen eine optimale Ansteuerung der Schalter zu errechnen, wobei die Randbedingungen eine oder mehrere der folgenden Informationen umfassen:
- möglichst geringe Ausgaben für aus dem Versorgungsnetz (101) entnommenen Strom,
- möglichst hohe Einnahmen für in das Versorgungsnetz (101) zurückgespeisten Strom,
- vom Energieversorger festgelegter Strompreis (150),
- statistisch zu erwartender Strompreis im Tagesverlauf,
- zu erwartende Nutzung der Energiespeichereinrichtung (130),
- Wettervorhersage (151)
- Ladestand (153) der Energiespeichereinrichtung (130).

## Claims

1. Circuit arrangement for the variable interconnection of energy generation devices (130, 131) and energy storage devices (130), having:
- a bidirectional AC-to-DC converter (110),
- a DC-to-DC converter (116, 160),
- at least four electrical switches (111...115),
- a control device (141) for actuating the switches (111...115) and the converters (110, 116, 160),
wherein
- the AC-to-DC converter (110) is connected on its DC side via a first of the electrical switches (111) to a first side of the DC-to-DC converter (116, 160),
- the AC-to-DC converter (110) is connected on its DC side via a second of the electrical switches (112) to a second side of the DC-to-DC converter (116, 160),
- the first side of the DC-to-DC converter (116, 160) is connected to a third of the electrical switches (113) and is connectable, via said switch, to an energy storage device (130),
- the second side of the DC-to-DC converter (116, 160) is connected to a fourth of the electrical switches (115) and is connectable, via said switch, to an energy generation device (131),
- the AC-to-DC converter (110) is connectable on its AC side to the electrical supply grid (101).

2. Circuit arrangement according to Claim 1, in which the DC-to-DC converter (116, 160) is a bidirectional DC-to-DC converter (160).

3. Circuit arrangement according to Claim 1, in which the DC-to-DC converter (116, 160) is configured to be unidirectional, and the second side of the DC-to-DC converter (116) is connected to a fifth electrical switch (114) and is connectable, via said switch, to the energy storage device (130).

4. Circuit arrangement according to Claim 3, in which the control device (141) is configured to close the fifth and first electrical switches (114, 111) and to open the remaining switches (112, 113, 115), as a result of which a current path is connected from the energy storage device (130) via the DC-to-DC converter (116) and the AC-to-DC converter (110) to the electrical supply grid (101), in order to feed electrical energy stored in the energy storage device (130) back to the supply grid (101).

5. Circuit arrangement according to Claim 3 or 4, in which the control device (141) is configured to close the third and fourth electrical switches (113, 115) and to open the remaining switches (111, 112, 114) in order to feed the energy storage device (130) from the energy generation device (131).

6. Circuit arrangement according to one of Claims 3 to 5, in which the control device (141) is configured to close the fourth and the first electrical switches (111, 115) and to open the remaining switches (112, 113, 114) in order to feed energy generated in the energy generation device (131) back to the supply grid (101).

7. Circuit arrangement according to one of Claims 3 to 5, in which the control device (141) is configured to close the second and the third electrical switches (112, 113) and to open the remaining switches (111, 114, 115) in order to charge the energy storage device (130) from the supply grid (101).

8. Circuit arrangement according to one of the preceding claims, in which the control device (141) comprises an optimization unit, configured to compute optimum actuation of the switches taking into consideration predeterminable boundary conditions, wherein the boundary conditions comprise one or more of the following types of information:
- outputs as low as possible for current drawn from the supply grid (101),
- intakes as high as possible for current fed back to the supply grid (101),
- electricity price (150) fixed by the energy supplier,
- electricity price to be expected statistically during the day,
- use of the energy storage device (130) to be expected,
- weather forecast (151),
- state of charge (153) of the energy storage device (130).

## Revendications

1. Montage de connexion variable de dispositifs (130, 131) de production d'énergie et de dispositifs (130) d'accumulation d'énergie, comportant :
- un convertisseur (110) courant alternatif/courant continu bidirectionnel,
- un convertisseur (116, 160) courant continu/courant continu,
- au moins quatre interrupteurs (111...115) électriques,
- un dispositif (141) de commande des interrupteurs (111...115) et des convertisseurs (110, 116, 160),
dans lequel
- le convertisseur (110) courant alternatif/courant continu est relié sur son côté courant continu à un premier côté du convertisseur (116, 160) courant continu/courant continu par l'intermédiaire d'un premier des interrupteurs (111) électriques,
- le premier côté du convertisseur (116, 160) courant continu/courant continu est relié à un troisième des interrupteurs (113) électriques et peut être relié par celui-ci à un dispositif (130) d'accumulation d'énergie,
- le deuxième côté du convertisseur (116, 160) courant continu/courant continu est relié à un quatrième des interrupteurs (115) électriques, et peut être relié par celui-ci à un dispositif (131) de production d'énergie.
- le convertisseur (110) courant alternatif/courant continu peut être relié sur son côté courant alternatif au secteur (101) d'alimentation électrique.

2. Montage suivant la revendication 1, dans lequel le convertisseur (116, 160) courant continu/courant continu est un convertisseur (160) courant continu/courant continu bidirectionnel.

3. Montage suivant la revendication 1, dans lequel le convertisseur (116, 160) courant continu/courant continu est constitué de manière unidirectionnelle et le deuxième côté du convertisseur (116) courant continu/courant continu est relié à un cinquième interrupteur (114) électrique et peut être relié par celui-ci au dispositif (130) d'accumulation d'énergie.

4. Montage suivant la revendication 3, dans lequel le dispositif (141) de commande est commandé, en vue de réinjecter de l'énergie électrique, accumulée dans le dispositif (130) d'accumulation d'énergie, dans le secteur (101) d'alimentation, pour fermer le cinquième et le premier interrupteurs (114, 111) électriques et pour ouvrir les interrupteurs (112, 113, 115) restants, grâce à quoi un trajet de courant est établi du dispositif (130) d'accumulation d'énergie au secteur (101) d'alimentation électrique par l'intermédiaire du convertisseur (116) courant continu/courant continu et du convertisseur (112) courant alternatif/courant continu.

5. Montage suivant la revendication 3 ou 4, dans lequel le dispositif (141) de commande est conformé pour, en vue d'une alimentation du dispositif (130) d'accumulation d'énergie à partir du dispositif (131) de production d'énergie, fermer le troisième et le quatrième interrupteurs (113, 115) électriques et ouvrir les interrupteurs (111, 112, 114) restants.

6. Montage suivant l'une des revendications 3 à 5, dans lequel le dispositif (141) de commande est conformé, en vue de réinjecter de l'énergie produite par le dispositif (131) de production d'énergie dans le secteur (101) d'alimentation pour fermer le premier et le quatrième interrupteurs (111, 115) électriques et pour ouvrir les interrupteurs (112, 113, 114) restants.

7. Montage suivant l'une des revendications 3 à 5, dans lequel le dispositif (141) de commande est conformé en vue de charger le dispositif (130) d'accumulation d'énergie à partir du secteur (101) d'alimentation, pour fermer le deuxième et le troisième interrupteurs (112, 113) électriques et pour ouvrir les interrupteurs (111, 114, 115) restants.

8. Montage suivant l'une des revendications précédentes, dans lequel le dispositif (141) de commande comprend une unité d'optimisation conformée pour calculer, en tenant compte de conditions aux limites pouvant être prescrites, une commande optimum des interrupteurs, les conditions aux limites comprenant une ou plusieurs des informations suivantes :
- sorties aussi petites que possible du courant prélevé du secteur (101) d'alimentation,
- absorption aussi grande que possible du courant réinjecté dans le secteur (101) d'alimentation,
- prix (150) du courant fixé par l'entreprise productrice d'électricité,
- prix du courant escompté statistiquement au cours de la journée,
- utilisation escomptée du dispositif (130) d'accumulation d'énergie,
- prévision (151) météorologique,
- état (153) de charge du dispositif (130) d'accumulation d'énergie.
